(19) Europäisches Patentamt
European Patent Office
Office européen des brevets

(11) Veröffentlichungsnummer : **0 074 047**
**B1**

(12) # EUROPÄISCHE PATENTSCHRIFT

(45) Veröffentlichungstag der Patentschrift : **24.04.85**

(21) Anmeldenummer : **82107945.6**

(22) Anmeldetag : **30.08.82**

(51) Int. Cl.⁴ : **C 07 F 9/09**, C 07 F 9/165, C 07 F 9/40, C 07 F 9/24, A 01 N 57/10, A 01 N 57/18, A 01 N 57/26

(54) **Oximinophosphorsäurederivate, Verfahren zu ihrer Herstellung und ihre Verwendung zur Bekämpfung von Schädlingen.**

(30) Priorität : **05.09.81 DE 3135182**

(43) Veröffentlichungstag der Anmeldung : **16.03.83 Patentblatt 83/11**

(45) Bekanntmachung des Hinweises auf die Patenterteilung : **24.04.85 Patentblatt 85/17**

(84) Benannte Vertragsstaaten : **BE CH DE FR GB IT LI NL**

(56) Entgegenhaltungen :
**DE-A- 2 243 370**
**DE-A- 2 304 848**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Buerstinghaus, Rainer, Dr.**
**Weinbergstrasse 85**
**D-6940 Weinheim (DE)**
Erfinder : **Kiehs, Karl, Dr.**
**Sudetenstrasse 22**
**D-6840 Lampertheim (DE)**
Erfinder : **Seufert, Walter, Dr.**
**Bruesseler Ring 28**
**D-6700 Ludwigshafen (DE)**
Erfinder : **Adolphi, Heinrich, Dr.**
**Kalmitweg 11**
**D-6703 Limburgerhof (DE)**

**EP 0 074 047 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Oximinophosphorsäurederivate, Verfahren zu ihrer Herstellung, Schädlingsbekämpfungsmittel, die diese Phosphorsäurederivate als Wirkstoffe enthalten, sowie ein Verfahren zur Bekämpfung von Schädlingen mit diesen Wirkstoffen.

Oximinophosphorsäurederivate sind beispielsweise aus der DE-AS 10 52 981 und aus der DE-OS 22 43 370 bekannt. Sie eignen sich zur Bekämpfung von Insekten und Spinnentieren.

Die bisher wirksamsten Verbindungen dieser Verbindungsklasse finden sich unter den Stoffen, die die DE-A-2 243 370 und DE-A-2 309 848 beschreiben. Überraschenderweise kann man durch Ersatz des Substituenten $R^3$ der DE-A-2 304 848 durch neue Substituenten zu Verbindungen gelangen, die hinsichtlich der Wirkung denen der DE-A-2 304 848 überlegen sind.

Es wurde gefunden, daß Oximinophosphorsäurederivate der Formel

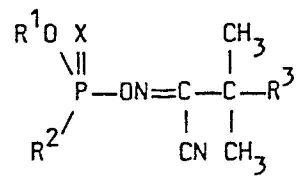

(I)

in der

$R^1$ eine unverzweigte oder verzweigte Alkylgruppe mit bis zu 4 Kohlenstoffatomen,

$R^2$ eine unverzweigte oder verzweigte Alkoxy- oder Alkylthiogruppe mit bis zu 4 Kohlenstoffatomen, eine unverzweigte oder verzweigte Alkoxyalkylthiogruppe mit bis zu 6 Kohlenstoffatomen, eine unverzweigte oder verzweigte Alkylgruppe mit bis zu 3 Kohlenstoffatomen, Phenyl, einen unverzweigten oder verzweigten Alkylamino- oder Dialkylaminorest mit jeweils bis zu 4 Kohlenstoffatomen in einer Alkylgruppe,

$R^3$ eine unverzweigte oder verzweigte Alkoxygruppe mit bis zu 4 Kohlenstoffatomen oder die Methoxymethylgruppe,

X Sauerstoff oder Schwefel bedeuten,

insektizid, akarizid und nematizid sehr gut wirksam und bekannten Wirkstoffen ähnlicher Struktur bzw. gleicher Wirkungsrichtung überlegen sind.

Unverzweigte oder verzweigte Alkylreste für $R^1$ sind beispielsweise Methyl, Ethyl, Propyl, Isopropyl, Butyl, Isobutyl, unverzweigte oder verzweigte Alkyl-, Alkoxy-, Alkylthio- oder Alkoxyalkylthioreste für $R^2$ sind beispielsweise Methyl, Ethyl, n-Propyl, Isopropyl, Methoxy, Ethoxy, Propoxy- und Butoxyreste, Methylthio, Ethylthio, n-Propylthio, Isopropylthio, n-Butylthio, sec.-Butylthio, Isobutylthio, 2-Methoxyethylthio, 2-Ethoxyethylthio, 2-Isopropoxyethylthio. Als Alkylamino- bzw. Dialkylaminoreste kommen für $R^2$ beispielsweise Methylamino, Dimethylamino, Ethylamino, Diethylamino, Methylethylamino, n-Butylamino, Di-n-butylamino in Betracht.

Bevorzugte Substituenten für $R^1$ sind Methyl und Ethyl ; bevorzugte Substituenten für $R^2$ sind Methoxy, Ethoxy, 2-Methoxyethylthio, 2-Ethoxyethylthio, Methyl, Ethyl, Phenyl, Methylamino, Dimethylamino und Isopropylamino.

Die Oximinophosphorsäurederivate der Formel I können durch Umsetzung von Oximen der Formel III gegebenenfalls in Gegenwart eines Säureacceptors oder durch Umsetzung von Alkalimetall-, Erdalkalimetall- oder gegebenenfalls substituierten Ammoniumsalzen dieser Oxime mit (Thiono)(Thiol)phosphor-(phosphon)säureester(amid)-halogeniden der Formel III nach folgender Reaktionsgleichung erhalten werden :

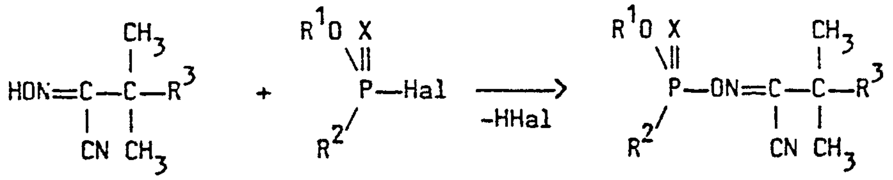


(II) (III) (I)

Dabei haben die Substituenten $R^1$, $R^2$ und $R^3$ die oben angegebenen Bedeutungen, und Hal steht für Halogen, vorzugsweise für Chlor.

Die Umsetzung wird zweckmäßigerweise in gegenüber den Reaktionsteilnehmern inerten Lösungs- oder Verdünnungsmitteln ausgeführt. Hierzu sind beispielsweise geeignet : aliphatische und aromatische, gegebenenfalls chlorierte Kohlenwasserstoffe, wie Petrolether, Benzol, Toluol, Xylol, Benzin, Dichlormethan, Chloroform, Tetrachlormethan, 1,2-Dichlorethan, Chlorbenzol, Ether wie Diethyl- und Di-

n-butylether, Methyl-tert.-butylether, Tetrahydrofuran, Dioxan ; Ketone, beispielsweise Aceton, Methylethylketon, Methylisopropylketon ; ferner Nitrile, wie Acetonitril und Propionitril. Auch Gemische dieser Lösungs- oder Verdünnungsmittel können verwendet werden.

Als Säureacceptoren können die bei der Phosphorylierung von Hydroxyverbindungen üblichen basischen Mittel Verwendung finden. Als besonders geeignet erweisen sich Alkalimetallcarbonate oder -alkoholate, wie Natrium- und Kaliumcarbonat, -methylat und -ethylat, ferner aliphatische, aromatische und heterocyclische Amine, z. B. Triethylamin, Dimethylamin, Piperidin, Dimethylanilin, Dimethylbenzylamin und Pyridin. In einigen Fällen erweist sich die Verwendung von Alkyllithiumverbindungen, z. B. n-Butyllithium oder Alkalimetallhydriden, z. B. Natriumhydrid als vorteilhaft.

Statt in Gegenwart eines Säureacceptors zu arbeiten, ist es ebenso gut möglich, zunächst die Salze, etwa die Alkalimetall-, Erdalkalimetall- oder Ammoniumsalze der α-Oximinonitrile der Formel II in Substanz herzustellen und diese anschließend mit der Verbindung der Formel III weiter umzusetzen.

Üblicherweise setzt man die Ausgangsstoffe in äquimolarem Verhältnis ein. Ein Überschuß der einen oder anderen Reaktionskomponente kann in einigen Fällen Vorteile bringen.

Die Reaktionstemperatur ist innerhalb eines größeren Bereiches variierbar. Im allgemeinen arbeitet man zwischen 0 und 120 °C, vorzugsweise im Bereich zwischen 20 und 50 °C. Da die Reaktion in einigen Fällen exotherm verläuft, kann eine Außenkühlung zu Beginn der Reaktion von Vorteil sein.

Die Umsetzung wird üblicherweise bei Normaldruck ausgeführt.

Die zur Herstellung der Verbindungen der Formel I als Ausgangsmaterialien verwendeten Oxime der Formel II sind nicht bekannt. Sie lassen sich aber in an sich bekannter Weise (DE-AS 15 67 142) durch Chlorieren der zugehörigen Isobutyraldoxime der Formel IV und anschließende Umsetzung mit Natrium- oder Kaliumcyanid gemäß folgender Reaktionsgleichung herstellen :

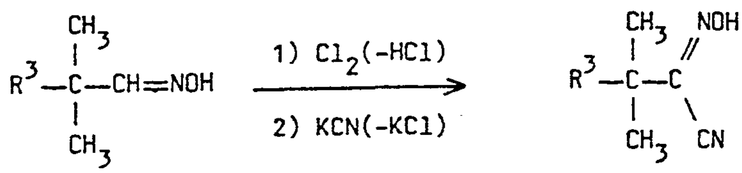


(IV) (II)

Oxime der Formel IV erhält man für den Fall, daß $R^3$ für Alkoxy steht, nach dem in der US-Patentschrift 2 496 198 beschriebenen Verfahren. Bedeutet $R^3$ die Methoxymethylgruppe, so erhält man das entsprechende Oxim durch Umsetzung von Methoxypicalaldehyd (V) mit Hydroxylaminhydrochlorid nach folgender Reaktionsgleichung :

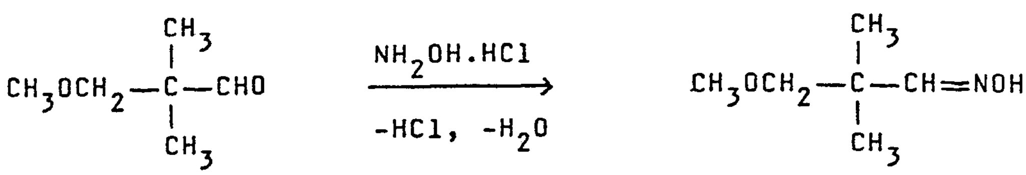


(V) (IV)

Die zur Synthese der Verbindungen der Formel I außerdem benötigten (Thiono) (Thiol)phosphor(phosphon) säureester-(amid) halogenide III sind aus Houben-Weyl, Methoden der organischen Chemie, Band XII/2, S. 274 ff, Georg Thieme-Verlag, Stuttgart, 1964 bekannt und lassen sich auf den dort beschriebenen Synthesewegen herstellen.

Die Oximinophosphorsäurederivate der Formel I fallen teilweise in Form farbloser oder schwach bräunlich gefärbter Öle an, die sich durch längeres Erwärmen unter vermindertem Druck auf mäßig erhöhte Temperatur (« Andestillieren ») von den letzten flüchtigen Anteilen befreien und auf diese Weise reinigen lassen. Erhält man die Verbindungen der Formel I in kristalliner Form, so kann ihre Reinigung durch Umkristallisation erfolgen.

Da die Oximinophosphorsäurederivate der Formel I in den strukturisomeren syn- und anti-Formen auftreten können, eignen sich ihre Schmelz- bzw. Siedebereiche wenig zu ihrer Charakterisierung ; zu diesem Zweck dienen daher im folgenden H-NMR-Spektren und Elementaranalyse.

Die folgenden Beispiele erläutern die Herstellung der Oximinophosphorsäurederivate der Formel I.

Beispiel 1

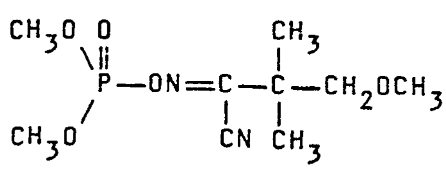

116 Teile Methoxypivalaldehyd werden in 600 Teilen Ethanol gelöst. Unter heftigem Rühren wird eine Lösung von 76,5 Teilen Hydroxylaminhydrochlorid und 86 Teilen Natriumacetat in 500 Teilen Wasser hinzugetropft, wobei die Temperatur vorübergehend auf 40 °C ansteigt. Man läßt 24 Stunden bei Raumtemperatur rühren, gießt die Mischung in 4 000 Teile Wasser, sättigt mit Natriumchlorid und extrahiert achtmal mit je 400 Teilen Ether. Die vereinigten Extrakte werden über Natriumsulfat getrocknet. Der nach dem Abziehen des Lösungsmittels verbleibende Rückstand wird bei 0,1 mbar destilliert, wobei zwischen 48 °C und 49 °C 90,4 Teile Methoxypivalaldoxim als farblose Flüssigkeit übergehen ; Ausbeute : 69 % der Theorie.

$C_6H_{13}NO_2$ (131)
Ber. : C 54,9 H 10,0 N 10,7
Gef. : C 54,8 H 10,0 N 10,9
60-MHz-H-NMR-Spektrum in $CDCl_3$ (δ-Werte) :
1,15 (6H), 3,25 (2H), 3,35 (3H), 7,45 (1H), 7,8-9,2 (1H).

In eine gut gekühlte Lösung von 78,5 Teilen Methoxypivalaldoloxim in 800 Teilen Ether leitet man unterhalb − 20 °C 46,9 Teile Chlorgas ein ; anschließend werden sämtliche flüchtigen Bestandteile der Reaktionsmischung bei 20 °C am Rotationsverdampfer abgezogen, der Rückstand in 400 Teilen Ether aufgenommen und die erhaltene dunkelblaue Lösung bis zum Verschwinden der gebildeten Chlornitrosoverbindung bei Raumtemperatur aufbewahrt. Danach fügt man die nunmehr farblose Flüssigkeit binnen zwei Stunden zu einer auf 10 bis 15 °C abgekühlten Suspension von 42,9 Teilen Kaliumcyanid in 450 Teilen Methanol und läßt drei Stunden bei Raumtemperatur nachrühren. Das abgeschiedene Kaliumchlorid wird abgesaugt, das Filtrat eingeengt, der Rückstand in Ether aufgenommen, dreimal mit Wasser gewaschen und über Magnesiumsulfat getrocknet. Nach dem Abziehen des Lösungsmittels, zuletzt bei 0,001 mbar und 40 °C, verbleiben 75,1 Teile Cyano-α-(2-methoximethyl-prop-2-yl)-acetoxim in Form eines viskosen Öles, welches nach kurzer Zeit durchkristallisiert. Fp. 75-76 °C ; Ausbeute : 81 % der Theorie.

$C_7H_{12}N_2O_2$ (156)
Ber. : C 53,8 H 7,7 N 17,9
Gef. : C 54,2 H 7,7 N 18,0
60-MHz-N-NMR-Spektrum in $CDCl_3$ (δ-Werte) :
1,30 (6H), 3,45 (5H), 12,1-12,8 (1H).

7,80 Teile α-Oximino-(2-methoximethyl)-prop-2-yl-acetonitril und 7,41 Teile Phosphorsäure-O,O-dimethylesterchlorid werden in 60 Teilen Acetonitril vorgelegt und unter intensivem Rühren binnen anderthalb Stunden mit 6,90 Teilen fein gepulvertem Kaliumcarbonat versetzt. Die Reaktionsmischung wird 36 Stunden bei Raumtemperatur gerührt, dann von unlöslichen Bestandteilen abgesaugt und das Filtrat unter vermindertem Druck eingeengt. Der Rückstand wird in Ether aufgenommen, dreimal mit Wasser gewaschen, über Natriumsulfat getrocknet und vom Lösungsmittel befreit. Nach dem Andestillieren bei 0,02 mbar und 50 °C verbleiben 12,2 Teile O-(O,O-Dimethylphosphoryl)-α-cyano-α-(2-methoxymethyl-prop-2-yl)-acetoxim als farbloses, viskoses Öl ; Ausbeute : 92 % der Theorie.

$C_9H_{17}N_2O_5P$ (264)
Ber. : C 40,9 H 6,5 N 10,6
Gef. : C 41,4 H 6,7 N 10,8
60-MHz-H-NMR-Spektrum in $CDCl_3$ (δ-Werte) :
1,35 (6H), 3,45 (3H), 3,50 (2H), 3,95 (6H).

## Beispiel 2

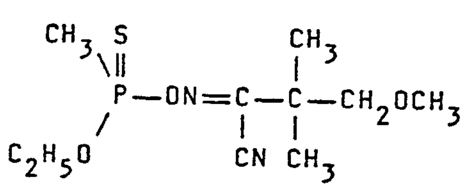

8,12 Teile Methyl-thiophosphonsäure-O-methylesterchlorid läßt man zu einer Lösung von 7,80 Teilen Cyano-α-(2-methoxymethyl-prop-2-yl)-acetoxim in 60 Teilen Acetonitril tropfen. Unter intensivem Rühren werden 6,90 Teile Kaliumcarbonat portionsweise hinzugefügt. Die Reaktionsmischung wird nach beendeter Zugabe noch 12 Stunden auf 30 °C gehalten. Zur Aufarbeitung wird das gebildete Kaliumchlorid durch Filtration entfernt, das Filtrat eingeengt, der Rückstand in Essigester aufgenommen und mehrfach mit Wasser gewaschen. Nach dem Trocknen über Natriumsulfat werden die Lösungsmittelreste, zuletzt bei 0,02 mbar und 35 °C entfernt ; es verbleiben 13,2 Teile O-(O-Ethyl-methylthiophosphonyl)-α-cyano-α-(2-methoximethyl-prop-2-yl)-acetoxim ; Ausbeute : 95 % der Theorie.

$C_{10}H_{19}N_2O_3PS$ (278)
Ber. : C 43,2 H 6,9 N 10,1
Gef. : C 43,3 H 7,2 N 10,4
220-MHz-H-NMR-Spektrum in $CDCl_3$ (δ-Werte) :
1,25 (6H), 1,30 (3H), 1,97 (3H), 3,34 (3H), 3,40 (2H), 4,0-4,6 (2H).

Beispiel 3

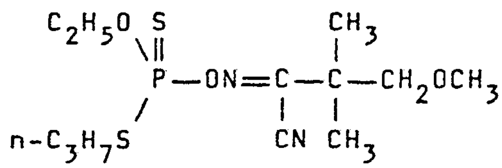

Analog Beispiel 1 erhält man durch Umsetzung von 7,8 Teilen α-Cyano-α-(2-methoxy-methyl-prop-2-yl)-acetoxim mit 10,95 Teilen Dithiophosphorsäure-O-ethyl-S-n-propyldiesterchlorid in Gegenwart von 6,90 Teilen Kaliumcarbonat 15,7 Teile O-(O-Ethyl-S-n-propyldithiophosphoryl)-α-cyano-α-(2-methoxymethyl-prop-2-yl)-acetoxim als hellgelbes Öl ; Ausbeute : 92 % der Theorie.

$C_{12}H_{23}N_2O_3PS_2$ (338)
Ber. : C 42,6 H 6,9 N 8,3
Gef. : C 43,1 H 7,1 N 8,3
60-MHz-H-NMR-Spektrum in $CDCl_3$ (δ-Werte) :
1,05 (3H), 1,35 (6H), 1,40 (3H), 1,60-2,20 (2H), 2,70-3,20 (2H), 3,40 (3), 3,45 (2H), 4,10-4,75 (2H).

Beispiel 4

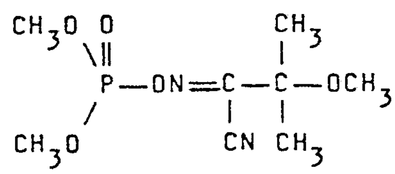

Analog der im Beispiel 1 beschriebenen Arbeitsweise erhält man aus 58,4 Teilen 2-Methoxyisobutyraldoxim, 38,9 Teilen Chlor und 35,6 Teilen Kaliumcyanid 55,3 Teile α-Cyano-α-(2-methoxy-prop-2-yl)-acetoxim ; Ausbeute : 78 % der Theorie.

$C_6H_{10}N_2O_2$
Ber. : C 50,7 H 7,1 N 19,7
Gef. : C 50,9 H 7,0 N 19,9
60-MHz-H-NMR-Spektrum in $CDCl_3$ (δ-Werte) :
1,50 (6H), 3,20 (3H), 12,5-13,5 (1H).

Aus 7,10 Teilen α-Cyano-α-(2-methoxy-prop-2-yl)-acetoxim, 6,90 Teilen Kaliumcarbonat und 7,40 Teilen Phosphorsäure-O,O-dimethylesterchlorid lassen sich nach der in Beispiel 1 erläuterten Umsetzung 9,81 Teile O-(O,O-Dimethylphosphoryl)-α-cyano-α-(2-methoxy-prop-2-yl)-acetoxim als nahezu farbloses, viskoses Öl gewinnen ; Ausbeute : 78 % der Theorie.

$C_8H_{15}N_2O_5P$ (250)
Ber. : C 38,4 H 6,0 N 11,2
Gef. : C 38,9 H 6,0 N 11,3
80-MHz-H-NMR-Spektrum in $CDCl_3$ (δ-Werte) :
1,50 (6H), 3,24 (3H), 3,87 (6H).

Beispiel 5

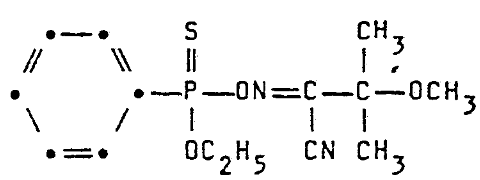

9,08 Teile Benzol-thiophosphonsäure-O-ethylesterchlorid läßt man zu einer Lösung von 5,86 Teilen α-Cyano-α-(2-methoxy-prop-2-yl)-acetoxim in 60 Teilen Aceton tropfen. Unter intensivem Rühren werden 5,72 Teile Kaliumcarbonat portionsweise hinzugefügt. Die Reaktionsmischung wird nach beendeter Zugabe noch 8 Stunden auf 35 °C gehalten. Zur Aufarbeitung wird das gebildete Kaliumchlorid durch Filtration entfernt, das Filtrat eingeengt, der Rückstand in Essigester aufgenommen und gründlich mit Wasser gewaschen. Nach dem Trocknen über Natriumsulfat werden die Lösungsmittelreste, zuletzt bei 0,01 mbar und 40 °C entfernt ; es verbleiben 12,83 Teile O-(O-Ethylbenzolthiophosphonyl)-α-Cyano-α-(2-methoxy-prop-2-yl)-acetoxim als hellgelbes Öl ; Ausbeute : 89 % der Theorie.

$C_{14}H_{19}N_2O_3PS$ (350)
Ber. : C 51,5 H 5,9
Gef. : C 51,1 H 5,9
80-MHz-H-NMR-Spektrum in $CDCl_3$ (δ-Werte) :
1,42 (3H), 1,44 (6H), 3,08 (3H), 4,05-4,65 (2H), 7,25-7,7 (3H), 7,75-8,2 (2H).

Beispiel 6

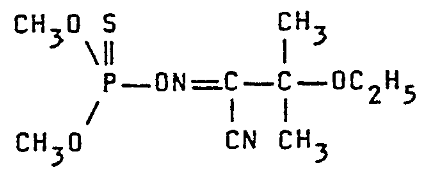

Eine Lösung von 52,4 Teilen Ethoxyisobutyraldoxim in 590 Teilen Ether wird auf − 30 °C abgekühlt ; bei dieser Temperatur leitet man 31,2 Teile Chlor ein und hält die Mischung nach beendeter Zugabe noch 20 Minuten bei − 15 °C. Anschließend wird bei 20 °C unter vermindertem Druck eingeengt, der teilweise kristalline Rückstand in 320 Teilen Methylenchlorid aufgenommen und über Nacht bei Raumtemperatur aufbewahrt. Diese Lösung läßt man binnen 1,5 Stunden unter heftigem Rühren zu einer auf 15 °C abgekühlten Suspension von 29,25 Teilen Kaliumcyanid in 300 Teilen Methanol tropfen. 3 Stunden später wird das ausgefallene Kaliumchlorid abgesaugt, die flüssige Phase eingeengt, der Rückstand in 400 Teilen Ether aufgenommen, dreimal mit Wasser gewaschen und über Natriumsulfat getrocknet. Nach dem vollständigen Entfernen des Lösungsmittels bei 0,02 mbar verbleiben 49,4 Teile eines kristallinen Feststoffes ; Fp. : 77-78 °C ; Ausbeute : 79 % der Theorie.

$C_7H_{12}N_2O_2$ (156)
Ber. : C 53,8 H 7,7 N 17,9
Gef. : C 54,1 H 7,8 N 18,3
60-MHz-H-NMR-Spektrum in $CDCl_3$ (δ-Werte) :
1,25 (3H), 1,50 (6H), 3,40 (2H), 9,4-10,3 (1H).

6,62 Teile Kaliumcarbonat werden kontinuierlich zu einer Lösung von 7,48 Teilen α-Cyano-α-(2-ethoxy-prop-2-yl)-acetoxim in 60 Teilen Methylethylketon gegeben, wobei die Temperatur vorübergehend auf 28 °C ansteigt. Die Mischung wird 24 Stunden bei 20 °C gerührt, vom gebildeten Kaliumchlorid abgesaugt und unter vermindertem Druck vom Lösungsmittel befreit. Der Rückstand wird in 200 Teilen Essigester aufgenommen, dreimal mit Wasser gewaschen, über Natriumsulfat getrocknet und eingeengt. Nach dem Abziehen des Lösungsmittels bei 0,02 mbar und 30 °C verbleiben 11,1 Teile O-(O,O-Dimethylthiophosphoryl)-α-cyano-α-(2-ethoxy-prop-2-yl)-acetoxim ; Ausbeute : 82 % der Theorie.

$C_9H_{17}N_2O_4PS$ (280)
Ber. : C 38,6 H 6,1 N 10,0
Gef. : C 38,8 H 6,1 N 10,1
60-MHz-H-NMR-Spektrum in $CDCl_3$ (δ-Werte) :
12,5 (3H), 1,50 (6H), 3,45 (2H), 3,90 (6H).

Beispiel 7

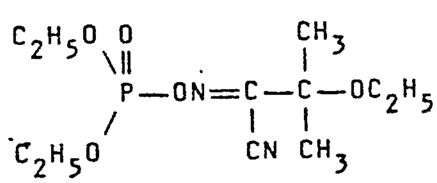

Analog Beispiel 6 erhält man durch Umsetzung von 7,48 Teilen α-Cyano-α-(2-ethoxy-prop-2-yl)-acetoxim mit 8,27 Teilen Phosphorsäure-O,O-diethylesterchlorid und 6,62 Teilen Kaliumcarbonat in 60

Teilen Acetonitril 12,6 Teilen O-(O,O-Diethylthiophosphoryl)-α-cyano-α-(2-ethoxy-prop-2-yl)-acetoxim als gelbliches Öl. Ausbeute : 90 % der Theorie.

$C_{11}H_{21}N_2O_5P$ (292)
Ber. : C 45,2 H 7,2 N 9,6
Gef. : C 44,8 H 7,4 N 9,5
360-MHz-H-NMR-Spektrum in $CDCl_3$ (δ-Werte) :
1,22 (3H), 1,40 (6H), 1,51 (6H), 3,40 (2H), 4,25 (4H).

Beispiel 8

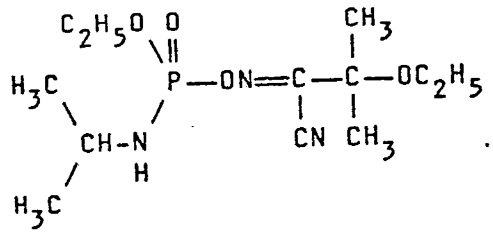

Durch Umsetzung von 7,80 Teilen α-Cyano-α-(2-ethoxy-prop-2-yl)-acetoxim mit 9,28 Teilen Phosphorsäure-ethylester-N-isopropylamid-chlorid in Gegenwart von 6,90 Teilen Kaliumcarbonat und 50 Teilen Acetonitril erhält man 13,60 Teile O-(O-Ethyl-N-isopropylamidphosphoryl)-α-cyano-α-(2-ethoxy-prop-2-yl)-acetoxim, Ausbeute : 89 % der Theorie.

$C_{12}H_{24}N_3O_4P$ (305)
Ber. : C 47,2 H 7,9 N 13,7
Gef. : C 47,6 H 7,8 N 13,6
60-MHz-H-NMR-Spektrum in $CDCl_3$ (δ-Werte) :
12,5 (6H), 1,30 (3H), 1,55 (6H), 3,05-3,35 (1H), 3,45 (2H), 4,30 (2H).

Beispiel 9

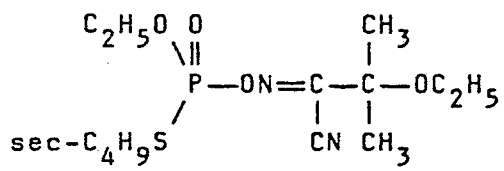

7,80 Teile α-Cyano-α-(2-ethoxy-prop-2-yl)-acetoxim werden in 50 Teilen absolutem Tetrahydrofuran gelöst und unter Rühren zu einer Suspension von 1,57 Teilen Natriumhydrid (mit 20 % Paraffinöl) in 10 Teilen Tetrahydrofuran getropft. Man läßt bis zur Beendigung der Wasserstoffentwicklung (ca. 4 Stunden) bei Raumtemperatur rühren und fügt anschließend 10,1 Teile Thiophosphorsäure-O-ethyl-S-but-2-yl-diesterchlorid hinzu. 24 Stunden später wird das Lösungsmittel unter vermindertem Druck abgezogen, der Rückstand in 200 Teilen einer Mischung aus Pentan/Ether (3 : 1) aufgenommen, dreimal mit Wasser gewaschen und über Natriumsulfat getrocknet ; nach Entfernen des Lösungsmittels verbleiben 13,4 Teile O-(O-Ethyl-S-but-2-yl-thiophosphoryl)-α-cyano-α)-(2-ethoxy-prop-2-yl)-acetoxim ; Ausbeute : 83 % der Theorie.

$C_{13}H_{25}N_2O_4PS$ (322)
Ber. : C 44,7 H 7,2 N 8,7
Gef. : C 45,1 H 7,0 N 8,6
80-MHz-H-NMR-Spektrum in $CDCl_3$ (δ-Werte) :
1,00 (3H), 1,20 (3H), 1,35 (3H), 1,40 (3H), 1,50 (6H), 3,15-3,65 (3H), 4,05-4,50 (2H).

Die folgenden Verbindungen der Formel I können beispielsweise analog hergestellt werden :

(Siehe Tabelle Seite 8 f.)

| Nr. | $R^1$ | $R^2$ | $R^3$ | X | H-NMR-Daten (MHz, Lösungsmittel, δ-Werte) |
|---|---|---|---|---|---|
| 10 | $CH_3$ | $C_2H_5$ | $CH_2OCH_3$ | S | (60, $CDCl_3$) 1,20 (3H), 1,35 (6H), 21,14 (2H), 3,30 (3H), 3,35 (2H), 3,75 (3H) |
| 11 | $CH_3$ | $OCH_3$ | $CH_2OCH_3$ | S | (60, $CDCl_3$) 1,37 (6H), 3,41 (3H), 3,48 (2H), 3,82 (2H), 3,95 (6H) |
| 12 | $C_2H_5$ | $OC_2H_5$ | $CH_2OCH_3$ | S | (60, $CDCl_3$) 1,35 (6H), 1,44 (6H), 3,40 (3H), 3,45 (2H), 4,10-4,75 (4H) |
| 13 | $C_2H_5$ | $C_2H_5$ | $CH_2OCH_3$ | S | (60, $CDCl_3$) 1,35 (6H), 1,37 (3H), 2,21 (2H), 3,38 (3H), 3,43 (2H), 4,03-4,65 (2H) |
| 14 | $C_2H_5$ | $OC_2H_5$ | $CH_2OCH_3$ | O | (60, $CDCl_3$) 1,35 (6H), 1,40 (6H), 3,40 (3H), 3,45 (2H), 4,10-4,65 (4H) |
| 15 | $C_2H_5$ | $C_6H_5$ | $CH_2OCH_3$ | S | (60, $CDCl_3$) 1,35 (6H), 1,55 (3H), 3,40 (3H), 3,45 (2H), 4,2-4,85 (2H), 7,50-7,95 (3H), 8,00-8,50 (2H) |
| 16 | $C_2H_5$ | $OC_2H_5$ | $OCH_3$ | S | (100, $CCl_4$) 1,40 (6H) 1,52 (6H), 3,23 (3H), 4,10-4,48 (4H) |
| 17 | $C_2H_5$ | $OC_2H_5$ | $OCH_3$ | O | (100, $CCl_4$) 1,38 (6H), 1,50 (6H), 3,21 (3H), 4,10-4,47 (4H) |
| 18 | $C_2H_5$ | S-n-$C_3H_7$ | $OC_2H_5$ | S | (360, $CDCl_3$) 1,05 (3H), 1,20 (3H), 1,42 (3H), 1,53 (6H), 1,75 (2H), 2,98 (2H), 3,36 (2H), 4,28 (2H) |
| 19 | $C_2H_5$ | $C_2H_5$ | $OCH_3$ | S | (360, $CCl_4$) 1,22 (3H), 1,33 (3H), 1,52 (6H), 2,18 (2H), 3,23 (3H), 4,26 (2H) |

| Nr. | $R^1$ | $R^2$ | $R^3$ | X | H-NMR-Daten (MHz, Lösungsmittel, δ-Werte) |
|---|---|---|---|---|---|
| 20 | $C_2H_5$ | $S-n-C_3H_7$ | $OCH_3$ | S | (360, $CDCl_3$) 1,02 (3H), 1,40 (3H), 1,52 (6H), 1,75 (2H), 2,98 (2H), 3,23 (3H), 4,30 (2H) |
| 21 | $CH_3$ | $OCH_3$ | $OC_2H_5$ | O | (60, $CDCl_3$) 1,35 (3H), 1,40 (6H), 3,55 (2H), 3,95 (6H) |
| 22 | $C_2H_5$ | $OC_2H_5$ | $OC_2H_5$ | S | (60, $CDCl_3$) 1,37 (3H), 1,50 (6H), 1,60 (6H), 3,55 (2H), 4,10-4,75 (4H) |
| 23 | $CH_3$ | $C_2H_5$ | $OCH_3$ | S | (60, $CDCl_3$) 1,30 (3H), 1,55 (6H), 2,15 (2H), 3,20 (3H), 3,80 (3H) |
| 24 | $CH_3$ | $OCH_3$ | $OCH_3$ | O | (80, $CDCl_3$) 1,50 (6H), 3,25 (3H), 3,95 (6H) |
| 25 | $C_2H_5$ | $C_2H_5$ | $OC_2H_5$ | S | (60, $CDCl_3$) 1,30 (3H), 1,34 (3H), 1,45 (3H), 1,60 (6H), 2,20 (2H), 3,55 (2H), 4,10-4,70 (2H) |
| 26 | $CH_3$ | $C_2H_5$ | $OC_2H_5$ | S | (60, $CDCl_3$) 1,25 (3H), 1,30 (3H), 1,50 (6H), 2,25 (2H), 3,50 (2H), 3,90 (3H) |
| 27 | $C_2H_5$ | $S-n-C_3H_7$ | $OC_2H_5$ | O | (60, $CDCl_3$) 1,10 (3H), 1,35 (3H), 1,45 (3H), 1,55 (6H), 1,80 (2H), 3,00 (2H), 3,45 (2H), 4,00-4,70 (2H) |
| 28 | $C_2H_5$ | $CH_3$ | $OC_2H_5$ | S | (60, $CDCl_3$) 1,30 (3H), 1,40 (3H), 1,60 (6H), 2,05 (3H), 3,45 (2H), 4,25 (2H) |
| 29 | $C_2H_5$ | $N(CH_3)_2$ | $OC_2H_5$ | O | (60, $CDCl_3$) 1,35 (3H), 1,50 (3H), 1,65 (6H), 2,85 (6H), 3,50 (2H), 4,00-4,60 (2H) |

| Nr. | $R^1$ | $R^2$ | $R^3$ | X | H-NMR-Daten (MHz, Lösungsmittel, δ-Werte) |
|---|---|---|---|---|---|
| 30 | $C_2H_5$ | S-sec.-$C_4H_9$ | $OC_2H_5$ | S | (80, $CCl_4$) 1,05 (3H), 1,20 (3H), 1,35 (3H), 1,40 (3H), 1,50 (6H), 1,65 (2H), 3,20-3,65 (3H), 4,05-4,50 (2H) |
| 31 | $C_2H_5$ | S-sec.-$C_4H_9$ | $OCH_3$ | S | (360, $CDCl_3$) 1,03 (3H), 1,44 (3H), 1,47 (3H) 1,51 (6H), 3,24 (3H), 3,47 (1H), 4,30 (2H) |
| 32 | $C_2H_5$ | $NH(CH_3)_2$ | $OC_2H_5$ | S | (60, $CDCl_3$) 1,25 (6H), 1,30 (3H), 1,60 (6H), 3,05-3,35 (1H), 3,43 (2H), 4,35 (2H) |
| 33 | $C_2H_5$ | $N(CH_3)_2$ | $OC_2H_5$ | S | (60, $CDCl_3$) 1,35 (3H), 1,50 (3H), 1,60 (6H), 2,85 (6H), 3,50 (2H), 4,05-4,65 (2H) |
| 34 | $C_2H_5$ | S-iso-$C_4H_9$ | $OC_2H_5$ | O | (60, $CDCl_3$) 1,05 (6H), 1,25 (3H), 1,40 (3H), 1,55 (6H), 1,95 (1H), 2,85 (2H), 3,60 (2H), 4,00-4,60 (2H) |
| 35 | $C_2H_5$ | $SCH_2CH_2OCH(CH_3)_2$ | $OC_2H_5$ | O | (60, $CDCl_3$) 1,15 (6H), 1,25 (3H), 1,45 (3H), 1,55 (6H), 2,75-3,35 (2H), 3,40-3,65 (5H), 4,00-4,55 (2H) |
| 36 | $C_2H_5$ | $SCH_2CH_2OCH_3$ | $OC_2H_5$ | O | (60, $CDCl_3$) 1,25 (3H), 1,50 (3H), 1,60 (6H), 3,05 (2H), 3,30 (3H), 3,50 (2H), 3,60 (2H), 4,05-4,65 (2H) |

Die erfindungsgemäßen Oximinophosphorsäurederivate der Formel I sind geeignet, Schädlinge aus der Klasse der Insekten, Milben, Zecken und Nematoden wirksam zu bekämpfen.

Zu den schädlichen Insekten gehören aus der Ordnung der Schmetterlinge (Lepidoptera) beispielsweise Plutella maculipennis (Kohlschabe), Leucoptera coffeella (Kaffeemotte), Hyponomeuta malinellus (Apfelbaumgespinstmotte), Argyresthia conjugella (Apfelmotte), Sitotroga cereallella (Getreidemotte), Phthorimaea operculella (Kartoffelmotte), Capua reticulana (Apfelschalenwickler), Sparganothis pilleriana (Springwurm), Cacoecia murinana (Tannentriebwickler), Tortrix viridana (Eichenwickler), Clysia ambiguella (Heu- und Sauerwurm), Evetria buoliana (Kieferntriebwickler), Polychrosis botrana (Bekreuzter Traubenwickler), Cydia pomonella (Obstmade), Laspeyresia molesta (Pfirsichtriebbohrer), Laspeyresia funebrana (Pflaumenwickler), Ostrinia nubilalis (Maiszünsler), Loxostege sticticalis (Rübenzünsler), Ephestia kuehniella (Mehlmotte), Chilo suppressalis (Reisstengelbohrer), Galleria mellonella (Wachsmotte), Malacosoma neustria (Ringelspinner), Dendrolimus pini (Kiefernspinner), Taumatopoea pityocampa (Pinienprozessionsspinner), Phalera bucephala (Mondfleck), Cheimatobia brumata (Kleiner Frostspanner), Hibernia defoliaria (Großer Frostspanner), Bupalus piniarius (Kiefernspanner), Hyphantria cunea (Weißer Bärenspinner), Agrotis segetum (Wintersaateule), Agrotis ypsilon (Ypsiloneule), Barathra brassicae (Kohleule), Cirphis unipuncta (Heerwurm), Prodenia litura (Baumwollraupe), Laphygma exigua (Rüben-Heerwurm), Panolis flammea (Forleule), Earias insulana (Baumwollkapselwurm), Plusia gamma (Gammaeule), Alabama argillacea (Baumwollblattwurm), Lymantria dispar (Schwammspinner), Lymantria monacha (Nonne), Pieris brassicae (Kohlweißling), Aporia crataegi (Baumweißling) ; Heliothis virescens (Tabakknospenwurm) ;

aus der Ordnung der Käfer (Coleoptera) beispielsweise Blitophaga undata (Schwarzer Rübenaaskäfer), Melanotus communis (Drahtwurm), Limonius californicus (Drahtwurm), Agriotes lineatus (Saatschnellkräfer), Agricotes obscurus (Humusschnellkäfer), Agrilus sinuatus (Birnbaum-Prachtkäfer), Meligethes aeneus (Rapsglanzkäfer), Atomaria linearis (Moosknopfkäfer), Epilachna varivestis (Mexikanischer Bohnenkäfer), Phyllopertha horticola (Junikäfer), Popillia japonica (Japankäfer), Melolontha melolontha (Feldmaikäfer), Melolontha hippocastani (Waldmaikäfer), Amphimallus solstitialis (Brachkäfer), Crioceris asparagi (Spargelhähnchen), Lema melanopus (Getreidehähnchen), Leptinotarsa decemlineata (Kartoffelkäfer), Phaedon cochleariae (Meerrettich-Blattkäfer), Phaedon cochleariae (Meerrettich-Blattkäfer), Phyllotreta nemorum (Kohlerdfloh), Chaetocnema tibialis (Rübenflohkäfer), Phylloides chrysocephala (Raps-Flohkäfer), Diabrotica 12-punctata (Südlicher Maiswurzelwurm), Cassida nebulosa (Nebliger Schildkäfer), Bruchus lentis (Linsenkäfer), Bruchus rufimanus (Pferdebohnenkäfer), Bruchus pisorum (Erbsenkäfer), Sitona lineatus (Linierter Blattrandkäfer), Otiorrhynchus sulcatus (Gefurchter Lappenrüßler), Otiorrhynchus ovatus (Erdbeerwurzelrüßler), Hylobies abietis (Großer Brauner Rüsselkäfer), Byctiscus betulae (Rebenstecher), Anthonomus pomorum (Apfelblütenstecher), Anthonomus grandis (Kapselkäfer), Ceuthorrhynchus assimilis (Kohlschotenrüßler), Ceuthorrhynchus napi (Großer Kohltriebrüßler), Sitophilus granaria (Kornkäfer), Anisandrus dispar (Ungleicher Holzborkenkäfer), Ips typographus (Bruchdrucker), Blastophagus piniperda (Gefurchter Waldgärtner) ;

aus der Ordnung der Zweiflügler (Diptera) beispielsweise Lycoria pectoralis, Mayetiola destructor (Hessenfliege), Dasineura brassicae (Kohlschoten-Gallmücke), Contarinia tritici (Gelbe Weizen-Gallmücke), Haplodiplosis equestris (Sattelmücke), Tipula paludosa (Wiesenschnake), Tipula oleracea (Kohlschnake), Dacus cucurbitae (Melonenfliege), Dacus oleae (Olivenfliege), Ceratitis capitata (Mittelmeerfruchtfliege), Rhagoletis cerasi (Kirschfruchtfliege), Rhagoletis pomonella (Apfelmade), Anastrepha ludens (Mexikanische Fruchtfliege), Oscinella frit (Fritfliege), Phorbia coarctata (Brachfliege), Phorbia antiqua (Zwiebelfliege), Phorbia brassicae (Kleine Kohlfliege), Pegomya hyoscyami (Rübenfliege), Anopheles maculipennis, Culex pipiens, Aedes aegypti (Gelbfiebermücke), Aedes vexans, Tabanus bovinus (Rinderbremse), Tipula paludosa (Wiesenschnake), Musca domestica (Stubenfliege), Fannia canicularis (Kleine Stubenfliege), Muscina stabulans, Glossina morsitans (Tsetse-Fliege), Oestrus ocis, Chrysomya macellaria, Chrysomya hominivorax, Lucilia cuprina, Lucilia sericata, Hypoderma lineata ;

aus der Ordnung der hautflügler (Hymenoptera) beispielsweise Athalia rosae (Rübenblattwespe), Hoplocampa minuta (Pflaumensägewespe), Monomorium pharaonis (Pharaoameise), Solenopsis geminata (Feuerameise), Atta sexdens (Blattschneiderameise) ;

aus der Ordnung der Wanzen (Heteroptera) beispielsweise Nezara viridula (Grüne Reiswanze), Eurygaster integriceps (Asiatische Getreidewanze), Blissus leucopterus (Chinch bug), Dysdercus cingulatus (Kapok-Wanze), Dysdercus intermedius (Baumwollwanze), Piesma quadrata (Rübenwanze), Lygus pratensis (Gemeine Wiesenwanze) ;

aus der Ordnung der Pflanzensauger (Homoptera) beispielsweise Perkinsiella saccharicida (Zuckerrohrzikade), Nilaparvata lugens (Braune Zikade), Nephotettix cinticeps (grüne Reiszikade), Empoasca fabae (Kartoffelzikade), Psylla mali (Apfelblattsauger), Psylla piri (Birnblattsauger), Trialeurodes vaporariorum (Weiße Fliege), Aphis fabae (Schwarze Bohnenlaus), Aphis pomi (Grüne Apfel. laus), Aphis sambuci (Holunderblattlaus), Aphidula nastrutii (Kreuzdornblattlaus), Cerosipha gossypii (Gurkenblattlaus), Sappaphis mali (Rosige Apfellaus), Sappaphis mala (Mehlige Birnblattlaus), Dysphis radicola (Mehlige Apfelfaltenlaus), Brachycaudus cardui (Große Pflaumenblattlaus), Brevicoryne brassicae (Kohlblattlaus), Phorodon humuli (Hopfenblattlaus), Rhopalomyzus ascalonicus (Zwiebellaus), Myzodes persicae (Grüne Pfirsichlaus), Myzus cerasi (Schwarze Sauerkirschenlaus), Dysaulacorthum pseudosolani (Gefleckte Kartoffellaus), Acyrthosiphon onobrychis (Grüne Erbsenlaus), Macrosiphon rosae (Große

Rosenblattlaus), Megoura viciae (Wickenlaus), Schizoneura lanuginosa (Birnenblattlaus), Pemphigus bursarius (Salatwurzellaus), Dreyfusia nordmannianae (Tannentrieblaus), Dreyfusia piceae (Weißtannenstammlaus), Adelges laricis (Rote Fichtengallenlaus), Viteus vitifolii (Reblaus) ;

aus der Ordnung der Termiten (Isoptera) beispielsweise Reticulitermes lucifugus, Calotermes flavicollis, Leucotermes flavipes, Termes natalensis ;

aus der Ordnung der Geradflügler (Orthoptera) beispielsweise Forficula auricularia (Gemeiner Ohrwurm), Acheta domestica (Heimchen), Gryllotalpa gryllotalpa (Maulwurfsgrille), Tachycines asynamorus (Gewächshausschrecke), Locusta migratoria (Wanderheuschrecke), Stauronotus maroccanus (Marokkanische Wanderheuschrecke), Schistocerca peregrina (Wanderheuschrecke), Nomadacris septemfasciata (Wanderheuschrecke), Melanoplus spretus (Felsengebirgsheuschrecke), Melano plus femur-rubrum (Rotbeinige Heuschrecke), Blatta orientalis (Küchenschabe), Blattella germanica (Deutsche Schabe), Periplaneta americana (Amerikanische Schabe), Blabera gigantea (Riesenschabe).

Zur Klasse der Arachnoidea gehören Milben und Zecken (Acarina) beispielsweise Ixodes ricinus (Holzbock), Ornithodorus moubata, Amblyomma americanum, Dermacentor silvarum, Boophilus microplus, Tetranychus telarius, Tetranychus atlanticus, Tetranychus pacificus, Paratetranychus pilosus, Bryobia praetiosa.

Zur Klasse der Nemathelminthes zählen beispielsweise Wurzelgallennematoden, z. B. Meloidogyne incognita, Meloidogyne hapla, Meloidogyne javanica, Zysten bildende Nematoden, z. B. Globodera rostochiensis, Heterodera schachtii, Heterodera avenae, Heterodera glycines, Heterodera triflolii, Stock- und Blattälchen, z. B. Ditylenchus dipsaci, Ditylenchus destructor, Pratylenchus neglectus, Pratylenchus penetrans, Partylenchus goodeyi, Paratylenchus curvitatus sowie Tylenchorhynchus dubius, Tylenchorhynchus claytoni, Rotylenchus robustus, Heliocotylenchus multicinctus, Radopholus similis, Belonolaimus longicaudatus, Longidorus elongatus, Trichodorus primitivus.

Die erfindungsgemäßen Verbindungen können mit Erfolg im Pflanzenschutz sowie auf dem Hygiene-, Vorratsschutz- und Veterinärsektor als Schädlingsbekämpfungsmittel eingesetzt werden.

Die Wirkstoffe können als solche, in Form ihrer Formulierungen oder den daraus bereitenen Anwendungsmöglichkeiten, z. B. in Form von direkt versprühbaren Lösungen, Pulvern, Suspensionen oder Dispersionen, Emulsionen, Öldispersionen, Pasten, Stäubemitteln, Streumitteln, Granulaten durch Versprühen, Vernebeln, Verstäuben, Verstreuen oder Gießen angewendet werden. Die Anwendungsformen richten sich ganz nach den Verwendungszwecken ; sie sollten in jedem Fall möglichst die feinste Verteilung der erfindungsgemäßen Wirkstoffe gewährleisten.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z. B. Benzol, Toluol, Xylol, Paraffin, Tetrahydronaphthalin, alkylierte Naphthaline oder deren Derivate, z. B. Methanol, Ethanol, Propanol, Butanol, Chloroform, Tetrachlorkohlenstoff, Cyclohexanol, Cyclohexanon, Chlorbenzol, Isophoron, stark polare Lösungsmittel, z. B. Dimethylformamid, Dimethylsulfoxid, N-Methylpyrrolidon, Wasser, in Betracht.

Wäßrige Anwendungsformen können aus Emulsionskonzentraten, Pasten oder netzbaren Pulvern (Spritzpulvern, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen Alkali-, Erdalkali-, Ammoniumsalze von Ligninsulfonsäure, Naphthalinsulfonsäure, Phenolsulfonsäure, Alkylarylsulfonate, Alkylsulfate, Alkylsulfonate, Alkali- und Erdalkalisalze der Dibutylnaphthalinsulfonsäure, Laurylethersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykolether, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctylphenol, Octylphenol, Nonylphenon, Alkylphenolpolyglykolether, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Lignin, Sulfitablaugen und Methylcellulose in Betracht.

Pulver-, Streu- und Stäubemittel können durch Mischen oder gemeinsames Vermahlen der wirksamen Substanzen mit einem festen Trägerstoff hergestellt werden.

Beispiele für Formulierungen sind :

I. 3 Gewichtsteile des Wirkstoffs Nr. 1 werden mit 97 Gewichtsteilen feinteiligem Kaolin innig vermischt. Man erhält auf diese Weise ein Stäubemittel, das 3 Gew.% des Wirkstoffs enthält.

II. 30 Gewichtsteile des Wirkstoffs Nr. 2 werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

III. 20 Gewichtsteile des Wirkstoffs Nr. 7 werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoethanolamid, 5 Gewichtsteilen Calciumsalz der Dodecylbenzolsulfonsäure und 5 Gewichtsteilen des Anlagerungsproduktes von 40 Mol Ethylenoxid an 1 Mol Ricinusöl besteht. Durch Ausgießen und feines Verteilen der Lösung in 100 000 Gewichtsteilen Wasser erhält man eine wäßrige Dispersion, die 0,02 Gew.% des Wirkstoffs enthält.

IV. 20 Gewichtsteile des Wirkstoffs Nr. 6 werden in einer Mischung gelöst, die aus 40 Gewichtsteilen Cyclohexanon, 30 Gewichtsteilen Isobutanol, 20 Gewichtsteilen des Anlagerungsproduktes von 7 Mol Ethylenoxid an 1 Mol Isooctylphenol und 10 Gewichtsteilen des Anlagerungsproduktes von 40 Mol Ethylenoxid an 1 Mol Ricinusöl besteht. Durch Eingießen und feines Verteilen der Lösung in 100 000 Gewichtsteilen Wasser erhält man eine wäßrige Dispersion, die 0,02 Gewichtsprozent des Wirkstoffs enthält.

Granulate, z. B. Umhüllungs-, Imprägnierungs- und Homogengranulate, können durch Bindung der Wirkstoffe an feste Trägerstoffe hergestellt werden. Feste Trägerstoffe sind z. B. Mineralerden, wie Silicagel, Kieselsäuren, Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z. B. Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver und andere feste Trägerstoffe.

Die Formulierungen enthalten im allgemeinen zwischen 0,1 und 95 Gew.% Wirkstoff, vorzugsweise zwischen 0,5 und 90 Gew.%.

Die Wirkstoffkonzentrationen in den anwendungsfertigen Zubereitungen können in größeren Bereichen variiert werden. Im allgemeinen liegen sie zwischen 0,000 1 und 10 %, vorzugsweise zwischen 0,01 und 1 %.

Die Wirkstoffe können auch mit gutem Erfolg im Ultra-Low-Volume-Verfahren (ULV) verwendet werden, wobei es möglich ist, Formulierungen mit mehr als 95 Gew.% Wirkstoff oder sogar den Wirkstoff ohne Zusätze auszubringen.

Zu den Wirkstoffen können Öle verschiedenen Typs, Herbizide, Fungizide, andere Insektizide, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1 : 10 bis 10 : 1 zugemischt werden.

Beispielsweise können folgende Mittel zugemischt werden : 1,2-Dibrom-3-chlorporpan, 1,2-Dichlorpropen, 1,3-Dichlorpropen + 1,2-Dichlorpropan, 1,2-Dibrom-ethan, 2-sec.-Butylphenyl-N-methylcarbamat, o-Chlorphenyl-N-methylcarbamat, 3-Isopropyl-5-methylphenyl-N-methylcarbamat, o-Isopropoxyphenyl-N-methylcarbamat, 3,5-Dimethyl-4-methylmercapto-phenyl-N-methylcarbamat, 4-Dimethylamino-3,5-xylyl-N-methylcarbamat, 2-(1,3-Dioxolan-2-yl)-phenyl-N-methylcarbamat, 1-Naphthyl-N-methylcarbamat, 2,3-Dihydro-2,2-dimethylbenzofuran-7-yl-N-methylcarbamat, 2,2-Dimethyl-1,3-benzodioxol-4-yl-N-methylcarbamat, 2-Dimethylamino-5,6-dimethyl-4-pyrimidinyl-dimethylcarbamat, 2-Methyl-2-(methylthio)-propionaldehyl-O-(methylcarbamoyl)-oxim, S-Methyl-N-[(methylcarbamoyl)-oxy]-thio-acetimidat, Methyl-N',N'-dimethyl-N-[(methylcarbamoyl)oxy]-1-thiooxamidat, N-(2-Methyl-4-chlor-phenyl)-N',N'-dimethylformamidin, Tetrachlorthiophen, 1-(2,6-Difluor-benzoyl)-3-(4-chlor-phenyl)-harnstoff, O,O-Dimethyl-O-(p-nitrophenyl)-phosphorthioat, O,O-Diethyl-O-(p-nitrophenyl)-phosphorthioat, O-Ethyl-O-(p-nitrophenyl)-phenyl-phosphonothioat, O,O-Dimethyl-O-(3-methyl-4-nitrophenyl)-phosphorthioat, O,O-Diethyl-O-(2,4-dichlorphenyl)-phosphorthioat, O-Ethyl-O-(2,4-dichlorphenyl)-phenyl-phosphonothioat, O,O-Dimethyl-O-(2,4,5-trichlorphenyl)-phosphorthioat, O-Ethyl-O-(2,4,5-trichlorphenyl)-ethyl-phosphonothioat, O,O-Dimethyl-O-(4-brom-2,5-dichlorphenyl)-phosphorthioat, O,O-Dimethyl-O-(2,5-dichlor-4-jodphenyl)-phosphorthioat, O,O-Dimethyl-O-(3-methyl-4-methylthiophenyl)-phosphorthioat, O-Ethyl-O-(3-methyl-4-methylthiophenyl)-isopropyl-phosphoramidat, O,O-Diethyl-O-[p-methylsulfinyl)-phenyl]-phosphorthioat, O-Ethyl-S-phenyl-ethyl-phosphonodithioat, O,O-Diethyl-[2-chlor-1-(2,4-dichlorphenyl)-vinyl]-phosphat, O,O-Dimethyl-[-2-chlor-1-(2,4,5-trichlorphenyl)]-vinylphosphat, O,O-Dimethyl-S-(1'-phenyl)-ethylacetat-phosphordithioat, Bis-(dimethylamino)-fluorphosphinoxid, Octamethyl-pyrophosphoramid, O,O,O,O-Tetraethyldithio-pyrophosphat, S-Chlormethyl-O,O-diethyl-phosphordithioat, O-Ethyl-S,S-dipropyl-phosphordithioat, O,O-Dimethyl-O-2,2-dichlorvinyl-phosphat, O,O-Dimethyl-1,2-dibrom-2,2-dichlorethylphosphat, O,O-Dimethyl-2,2,2-trichlor-1-hydroxy-ethylphosphonat, O,O-Dimethyl-S-[1,2-biscarbethoxy-ethyl-(1)]-phosphordithioat, O,O-Dimethyl-O-(1-methyl-2-carbmethoxyvinyl)-phosphat, O,O-Dimethyl-S-(N-methyl-carbamoyl-methyl)-phosphordithioat, O,O-Dimethyl-S-(N-methyl-carbamoyl-methyl)-phosphorthioat, O,O-dimethyl-S-(N-methoxyethyl-carbamoyl-methyl)-phosphordithioat, O,O-Dimethyl-S-(N-formyl-N-methyl-carbamoylmethyl-phosphordithioat, O,O-Dimethyl-O-[1-methyl-2-(methylcarbamoyl)-vinyl]-phosphat, O,O-Dimethyl-O-[(1-methyl-2-dimethylcarbamoyl)-vinyl]-phosphat, O,O-Dimethyl-O-[(1-methyl-2-chlor-2-diethylcarbamoyl)-vinyl]-phosphat, O,O-Diethyl-S-(ethylthio-methyl)-phosphordithioat, O,O-Diethyl-S-[(p-chlorphenylthio)-methyl]-phosphordithioat, O,O-Dimethyl-S-(2-ethylthioethyl)-phosphorthioat, O,O-Dimethyl-S-(2-ethylthioethyl)-phosphordithioat, O,O-Dimethyl-S-(2-ethylsulfinyl-ethyl)-phosphorthioat, O,O-Diethyl-S-(2-ethylthioethyl)-phosphordithioat, O,O-Diethyl-S-(2-ethylsulfi-

nylethyl)-phosphorthioat, O,O-Diethyl-thiophosphoryliminophenyl-acetonitril, O,O-Diethyl-S-(2-chlor-1-phthalimidoethyl)-phosphordithioat, O,O-Diethyl-S-[6-chlor-benzoxazolon-(2)-yl(3)]-methyldithiophosphat, O,O-Dimethyl-S-[2-methoxy-1,3,4-thiadiazol-5-[4H]-onyl-(4)-methyl]-phosphordithioat, O,O-Diethyl-O-[3,5,6-trichlor-pyridyl-(2)]-phosphorthioat, O,O-Diethyl-O-(2-pyrazinyl)-phosphorthioat, O,O-Diethyl-O [2-isopropyl-4-methyl-pyrimidinyl(6)]-phosphorthioat, O,O-Diethyl-O-[2-(diethylamino)-6-methyl-4-pyrimidinyl]-thionophosphat, O,O-Dimethyl-S-(4-oxo-1,2,3-benzotriazin-3-[4H]-yl-methyl)-phosphordithioat, O,O-Dimethyl-S-[(4,6-diamino-1,3,5-triazin-2-yl)-methyl]-phosphordithioat, O,O-Diethyl-(1-phenyl-1,2,4-triazol-3-yl)-thionophosphat, O,S-Dimethyl-phosphoramido-thioat, O,S-Dimethyl-N-acetyl-phosphoramidothioat, γ-Hexachlorcyclohexan, 1,1-Di-(p-methoxyphenyl)-2,2,2-trichlor-ethan, 6,7,8,9,10,10-Hexachloro-1,5,5a,6,9,9a-hexahydro-6,9-methano-2,4,3-benzodioxa-thiepin-3-oxid, Pyrethrine, DL-2-Allyl-3-methyl-cyclopenten-(2)-on-(1)-yl-(4)-DL-cis,- trans-chrysanthemat, 5-Benzyl-furyl-(3)-methyl-DL-cis,- trans-chrysanthemat, 3-Phenoxybenzyl (±)-cis,trans-2,2-dimethyl-3-(2,2-dichlorvinyl)-cyclopropancarboxylat, α-Cyano-3-phenoxybenzyl (±)-cis,trans-2,2-dimethyl-3-(2,2-dichlorvinyl)-cyclopropancarboxylat, (s)-α-Cyano-3-phenoxybenzyl-cis(1R,3R)-2,2-dimethyl-3-(2,2-dibromvinyl)-cyclopropancarboxylat, 3,4,5,6-Tetrahydrophthalimidoethyl-DL-cis,trans-chrysanthemat, 2-Methyl-5-(2-propinyl)-3-furylmethyl-chrysanthemat, (α-Cyano-3-phenoxybenzyl)-α-isopropyl-4-chlorphenylacetat.

Die folgenden Beispiele belegen die biologische Wirkung der neuen Verbindungen. Vergleichsmittel sind die aus der DE-AS 10 52 981 und der DE-AS 22 43 370 bekannte Oximinophosphorsäurederivate.

Die Numerierung der Wirkstoffe entspricht der der Beispiele und der tabellarischen Auflistung.

## Beispiel A

Kontaktwirkung auf Schaben (Blatta orientalis)

Der Boden eines 1 1-Einmachglases wird mit der acetonischen Lösung des Wirkstoffes behandelt. Nach dem Verdunsten des Lösungsmittels setzt man je Glas 5 adulte Schaben. Die Mortalität wird nach 48 Stunden bestimmt.

In diesem Test zeigen die Wirkstoffe Nr. 2, 3, 6, 7, 9, 10, 11, 13, 16, 17, 18, 19, 20, 21, 22, 23, 24, 25, 26, 27 eine bessere Wirkung als die Vergleichsmittel.

## Beispiel B

Kontaktwirkung auf Stubenfliegen (Musca domestica) ; Applikationstest.

4-Tage alte Imagines erhalten in leichter $CO_2$-Narkose 1 μl der acetonischen Lösung des Wirkstoffes auf das ventrale Abdomen appliziert. Hierzu wird eine Mikrometerspritze verwendet.

Je 20 Versuchstiere mit gleicher Behandlung bringt man dann in einen Folienbeutel von ca. 500 ml Inhalt. Nach 4 Stunden zählt man die Tiere in Rückenlage aus und ermittelt graphisch die LD 50.

In diesem Test zeigen die Wirkstoffe Nr. 1, 2, 6, 7, 10, 11, 12, 13, 19, 21, 22, 23, 24, 25 eine überlegene Wirkung.

## Beispiel C

Kontaktwirkung auf Blattläuse (Aphis fabae) ; Spritzversuch

Getopfte Bohnenpflanzen (Vicia faba) mit starken Blattlauskolonien werden in einer Spritzkammer mit wäßrigen Wirkstoffaufbereitungen tropfnaß gespritzt. Die Auswertung erfolgt nach 48 Stunden.

In diesem Test zeigen die Wirkstoffe Nr. 1, 2, 4, 5, 6, 7, 13, 14, 16, 17, 19, 20, 21, 22, 23, 24, 25, 26, 27, 30, 31 eine überlegene Wirkung.

## Beispiel D

Kontaktwirkung auf Zecken (Ornithodorus moubata)

Geprüft wird mit Zecke im 3. Larvenstadium. Dazu taucht man die Tiere, die sich in einem Papierbeutel befinden, für 3 Sekunden in die Prüfemulsion. Die Beutel werden frei aufgehängt. Nach 48 Stunden wird die Wirkung auf die Zecken beurteilt.

In diesem Test zeigen die Wirkstoffe Nr. 1, 4, 5, 8, 10, 11, 13, 14, 16, 17, 19, 21, 22, 23, 24, 25, 26, 28, 29 eine überlegene Wirkung.

## Beispiel E

Wirkung auf Wurzelgallennematoden (Meloidogyne incognita)

Die Versuche werden mit je 500 g Komposterde durchgeführt, die stark mit Wurzelgallennematoden

infiziert ist. Die Behandlung erfolgt mit der wäßrigen Wirkstoffaufbereitung durch Angießen in 20 ml der Aufbereitung.

Nach 6 bis 8 Wochen bonitiert man die Wurzeln auf Gallenbildung. Dabei zeigt sich, daß die Wirkstoffe Nr. 1, 3, 9, 11, 15, 18 bekannten Wirkstoffen ähnlicher Struktur überlegen sind.

### Beispiel F

Kontaktwirkung auf Stubenfliegen (Musca domestica) ; Dauerkontakt

Beide Teile einer Petrischale von 10 cm Durchmesser werden mit insgesamt 2 ml der acetonischen Wirkstofflösung ausgekleidet. Nach dem Verdunsten des Lösungsmittels (ca. 30 Minuten) bringt man je 20 4 Tage alte Fliegen in die Schalen. Die Mortalitätsrate wird nach 4 Stunden festgestellt.

In diesem Test wird mit den Wirkstoffen Nr. 1, 2, 4, 7, 10, 11, 13, 14, 16, 17, 19, 21, 23, 24, 28, 30 eine sehr hohe Mortalitätsrate erzielt.

### Beispiel G

Fraß- und Kontaktwirkung auf Raupen der Kohlschabe (Plutella maculipennis)

Blätter von jungen Kohlpflanzen werden 3 Sekunden lang in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt. Nach 48 Stunden beurteilt man die Wirkung.

Bei diesem Test zeigen z. B. die folgenden Wirkstoffe eine überlegene Wirkung gegenüber dem Stand der Technik : Nr. 2, 4, 5, 6, 7, 10, 11, 13, 16, 17, 19, 20, 22, 23, 24, 25, 26, 27, 30, 31.

## Patentansprüche

1. Oximinophosphorsäurederivate der Formel

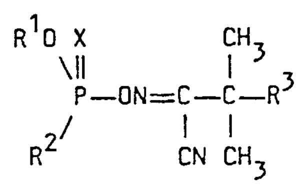

(I)

in der

$R^1$ eine unverzweigte oder verzweigte Alkylgruppe mit bis zu 4 Kohlenstoffatomen,

$R^2$ eine unverzweigte oder verzweigte Alkoxy- oder Alkylthiogruppe mit bis zu 4 Kohlenstoffatomen, eine unverzweigte oder verzweigte Alkoxyalkylthiogruppe mit bis zu 6 Kohlenstoffatomen, eine unverzweigte oder verzweigte Alkylgruppe mit bis zu 3 Kohlenstoffatomen, Phenyl, einen unverzweigten oder verzweigten Alkylamino- oder Dialkylaminorest mit jeweils bis zu 4 Kohlenstoffatomen in einer Alkylgruppe,

$R^3$ eine unverzweigte oder verzweigte Alkoxygruppe mit bis zu 4 Kohlenstoffatomen oder die Methoxymethylgruppe,

X Sauerstoff oder Schwefel bedeuten.

2. O-(O,O-Diethylthiophosphoryl)-α-cyano-α-(2-ethoxy-prop-2-yl)-acetoxim.

3. O-(O,O-Dimethylthiophosphoryl)-α-cyano-α-(2-ethoxy-prop-2-yl)-acetoxim.

4. Verfahren zur Herstellung von Oximinophosphorsäurederivaten der Formel I gemäß Anspruch 1, dadurch gekennzeichnet, daß man Oxime der Formel

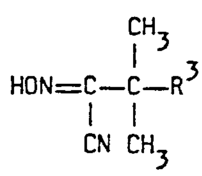

(II)

in der $R^3$ die im Anspruch 1 genannte Bedeutung hat, gegebenenfalls in Gegenwart eines Säureacceptors oder Alkalimetall-, Erdalkalimetall- oder gegebenenfalls substituierte Ammoniumsalze dieser Oxime mit (Thio)-(Thiol)phosphor(phosphon)säureester(amid)-halogeniden der Formel

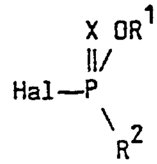

(III)

in der $R^1$, $R^2$ und X die im Anspruch 1 genannten Bedeutungen haben und Hal für Halogen steht, gegebenenfalls in Gegenwart eines Lösungs- oder Verdünnungsmittels bei Temperaturen zwischen 0 und . 120 °C umsetzt.

5. Schädlingsbekämpfungsmittel, enthaltend ein Oximinophosphorsäurederivat der Formel I gemäß Anspruch 1.

6. Schädlingsbekämpfungsmittel, enthaltend einen festen oder flüssigen Trägerstoff und mindestens ein Oximinophosphorsäurederivat der Formel I gemäß Anspruch 1.

7. Verwendung von Oximinophosphorsäurederivaten der Formel I gemäß Anspruch 1 zur Bekämpfung von Schädlingen.

8. Verfahren zur Bekämpfung von Schädlingen, dadurch gekennzeichnet, daß man eine wirksame Menge Oximinophosphorsäurederivat der Formel I gemäß Anspruch 1 auf Schädlinge bzw. deren Lebensraum einwirken läßt.

## Claims

1. An oximinophosphoric acid derivative of the formula

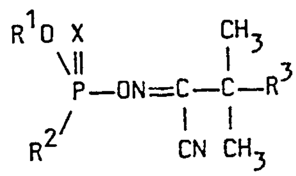

(I)

where

$R^1$ is straight-chain or branched alkyl of up to 4 carbon atoms,

$R^2$ is a straight-chain or branched alkoxy or alkylthio group of up to 4 carbon atoms, straight-chain or branched alkoxyalkylthio of up to 6 carbon atoms, straight-chain or branched alkyl of up to 3 carbon atoms, phenyl or a straight-chain or branched alkylamino or dialkylamino radical where each alkyl is of up to 4 carbon atoms,

$R^3$ is straight-chain or branched alkoxy of up to 4 carbon atoms or methoxymethyl, and

X is oxygen or sulfur.

2. O-(O,O-diethylthiophosphoryl)-α-cyano-α-(2-ethoxy-prop-2-yl)-acetoxime.

3. O-(O,O-dimethylthiophosphoryl)-α-cyano-α-(2-ethoxy-prop-2-yl)-acetoxime.

4. A process for the manufacture of oximinophosphoric acid derivatives of the formula I as claimed in claim 1, wherein an oxime of the formula

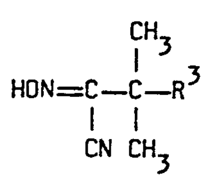

(II)

where $R^3$ has the meanings given in claim 1, is reacted in the presence or absence of an acid acceptor, or an alkali metal salt, alkaline earth metal salt or unsubstituted or substituted ammonium salt of such an oxime is reacted with a (thiono) (thiol) phosphoric(phosphonic) acid ester(amide) halide of the formula

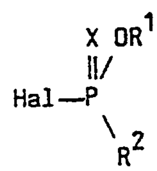

(III)

where $R^1$, $R^2$ and X have the meanings given in claim 1 and Hal is halogen, in the presence or absence of a solvent or diluent and at from 0° to 120 °C.

5. A pesticide containing an oximinophosphoric acid derivative of the formula I as claimed in claim 1.

6. A pesticide containing a solid or liquid carrier and at least one oximinophosphoric acid derivative of the formula I as claimed in claim 1.

7. The use of oximinophosphoric acid derivatives of the formula I as claimed in claim 1 for combating pests.

8. A process for combating pests, wherein an effective amount of an oximinophosphoric acid derivative of the formula I as claimed in claim 1 is allowed to act on the pests or their habitat.

**Revendications**

1. Dérivés de l'acide oximino-phosphorique de la formule

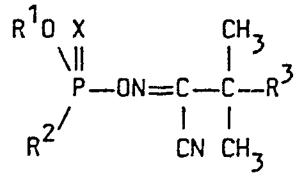

(I)

dans laquelle

$R^1$ représente un radical alkyle pouvant comporter jusqu'à quatre atomes de carbone, non ramifié ou ramifié,

$R^2$ désigne un groupe alcoxy- ou alkyl-thio pouvant comporter jusqu'à quatre atomes de carbone, un groupe alcoxyalkylthio non ramifié ou ramifié, pouvant comporter jusqu'à six atomes de carbone, un radical alkyle non ramifié ou ramifié, pouvant comporter jusqu'à trois atomes de carbone, un groupe phényle ou un groupe alkyl-amino ou dialkyl-amino non ramifié ou ramifié avec des radicaux alkyle en $C_1$ à $C_4$.

$R^3$ représente un radical alcoxy non ramifié ou ramifié, pouvant comporter jusqu'à quatre atomes de carbone ou le groupe méthoxy-méthyle et

X désigne un atome d'oxygène ou de soufre.

2. La O-(O,O-diéthylthiophosphoryl)-α-cyano-α-(2-éthoxy-prop-2-yl)-acét-oxime.

3. La O-(O,O-diméthylthiophosphoryl)-α-cyano-α-(2-éthoxy-prop-2-yl)-acét-oxime.

4. Procédé de préparation de dérivés d'acide oximinophosphorique de la formule I selon la revendication 1, caractérisé en ce que l'on fait réagir des oximes de la formule

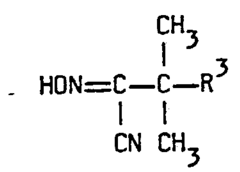

(II)

dans laquelle $R^3$ possède la signification définie, éventuellement en présence d'un fixateur d'acide, ou des sels de métaux alcalins ou de métaux alcalino-terreux ou d'ammonium éventuellement substitués de telles oximes, à des températures comprises entre 0 et 120 °C, le cas échéant dans un solvant ou un diluant, avec des halogénures d'un ester (amide) d'acide (thio) (lire : thiono) (thiol) phosphorique (phosphonique) de la formule

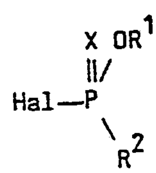

(III)

dans laquelle $R^1$, $R^2$ et X possèdent les significations définies dans la revendication 1 et Hal désigne un atome d'halogène.

5. Composition parasiticide, contenant un dérivé d'acide oximino-phosphorique de la formule I selon la revendication 1.

6. Composition parasiticide, contenant au moins un dérivé d'acide oximino-phosphorique de la formule I selon la revendication 1 dans un véhicule liquide ou solide.

7. Utilisation de dérivés de l'acide oximino-phosphorique de la formule I selon la revendication 1 pour la lutte contre des parasites.

8. Procédé de lutte contre des parasites, caractérisé en ce que l'on fait agir sur les parasites ou sur leur biotope une quantité efficace d'un dérivé d'acide oximino-phosphorique de la formule I selon la revendication 1.